# EUROPEAN PATENT APPLICATION

(11) **EP 2 447 408 A1**
(43) Date of publication of application: **02.05.2012**
(21) Application number: 11185349.5
(22) Date of filing: 17.10.2011
(51) Int. Cl.: D06F 37/22, D06F 37/26

(54) **Washing machine**

(30) Priority: 01.11.2010 KR 20100107754
(71) Applicant: Samsung Electronics Co., Ltd., Suwon-si, Gyeonggi-do 506-762 (KR)
(72) Inventor: Kim, Young Jae, Incheon (KR); Ryu, Doo Young, Gyeonggi-do (KR); Jung, Won Young, Seoul (KR)
(74) Representative: Grünecker, Kinkeldey, Stockmair & Schwanhäusser

(57) **Abstract**

A washing machine includes a tub (20) to contain water and a drum (30) rotatably installed within the tub. The drum includes a cylindrical body and a front member (32) made of resin, provided with a disc-shaped race (321) formed therein and covering the front surface of the body. The race (321) of the front member (32) and a mass body (320) in the race function as a balancer.

## Description

### BACKGROUND

### 1. Field

Embodiments of the present disclosure relate to a washing machine which stabilizes rotation of a drum at an early stage.

### 2. Description of the Related Art

In general, a washing machine includes a tub to contain water and a drum rotatably installed within the tub, and washes laundry through rotation of the drum, in which the laundry is placed, within the tub.

From among washing machines, there is a washing machine in which a balancer is installed on a drum so as to stabilize rotation of the drum at an early stage.

From among balancers, there is a ball balancer including a plurality of balls and a balancer housing provided with a race formed in a disc shape and configured such that the plurality of balls moves in the circumferential direction within the race. Such a ball balancer is fixed to the front surface or the rear surface of a drum.

### SUMMARY

Therefore, it is an aspect of the present disclosure to provide a washing machine which stabilizes rotation of a drum at an early stage.

Additional aspects of the disclosure will be set forth in part in the description which follows and, in part, will be apparent from the description, or may be learned by practice of the disclosure.

In accordance with one aspect of the present disclosure, a washing machine includes a tub to contain water and a drum rotatably installed within the tub, wherein the drum includes a cylindrical body, a front member covering the front surface of the body, and a rear member covering the rear surface of the body, the front member includes a first front member panel made of resin and including a first through hole through which laundry is put into the body and a first extension part extending from the first through hole in the radial direction, and a second front member panel made of resin and including a second through hole corresponding to the first through hole and a second extension part extending from the second through hole and corresponding to the first extension part, and at least one disc-shaped space formed by the first extension part and the second extension part, and at least one of the at least one disc-shaped space defines a race in which a mass body to reduce unbalance generated during rotation of the drum is accommodated so as to be movable in the circumferential direction, the race and the mass body forming a balancer.

The front member may further include a support part protruding in the radial direction and supported by the front end of the body.

The front member may further include a plurality of fastening parts protruding from the rear surface of the front member and separated from each other in the circumferential direction, and be fixed to the body through fastening members penetrating the body and fastened to the fastening parts.

The washing machine may further include a plurality of disc-shaped ribs protruding from one of the first front member panel and the second front member panel toward the other of the first front member panel and the second front member panel, and a plurality of disc-shaped grooves depressed in the other of the first front member panel and the second front member panel to accommodate the front ends of the plurality of disc-shaped ribs, and the at least one disc-shaped space may be formed by the plurality of disc-shaped ribs.

The front ends of the plurality of disc-shaped ribs may be fused to the plurality of disc-shaped grooves due to frictional heat according to relative rotation of the first front member panel and the second front member panel.

The mass body may include a plurality of balls.

The mass body may include a fluid.

In accordance with another aspect of the present disclosure, a washing machine includes a tub to contain water and a drum rotatably installed within the tub, wherein the drum includes a cylindrical body provided with an opened front surface and a front member made of resin, provided with a disc-shaped race formed therein and covering the front surface of the body, and the front member includes through holes through which laundry is put into the body.

In accordance with a further aspect of the present disclosure, a drum of a washing machine includes a cylindrical body and a front member covering the front surface of the body, wherein the front member is made of resin and is provided with a disc-shaped race formed therein.

### BRIEF DESCRIPTION OF THE DRAWINGS

These and/or other aspects of the disclosure will become apparent and more readily appreciated from the following description of the embodiments, taken in conjunction with the accompanying drawings of which:
FIG. 1 is a cross-sectional view schematically illustrating a washing machine in accordance with one embodiment of the present disclosure;

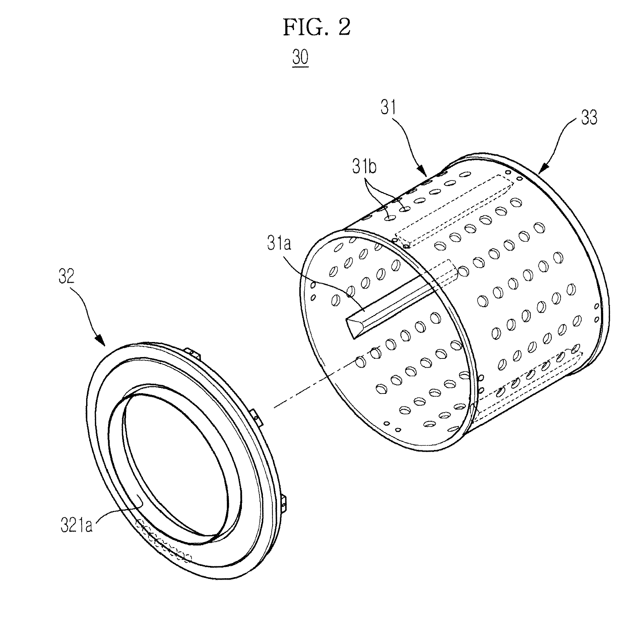

FIG. 2 is a partially exploded perspective view of a drum applied to the washing machine in accordance with the embodiment of the present disclosure;
FIG. 3 is an exploded perspective view of a front member applied to the washing machine in accordance with the embodiment of the present disclosure;
FIG. 4 is a partially cross-sectional view of the front member applied to the washing machine in accordance with the embodiment of the present disclosure; and
FIG. 5 is a partially cross-sectional view of a front member applied to a washing machine in accordance with another embodiment of the present disclosure.

### DETAILED DESCRIPTION

Reference will now be made in detail to the embodiments of the present disclosure, examples of which are illustrated in the accompanying drawings, wherein like reference numerals refer to like elements throughout.

Hereinafter, a washing machine in accordance with one embodiment of the present disclosure will be described with reference to the accompanying drawings.

This embodiment exemplarily illustrates a drum washing machine which washes laundry using a difference in elevation.

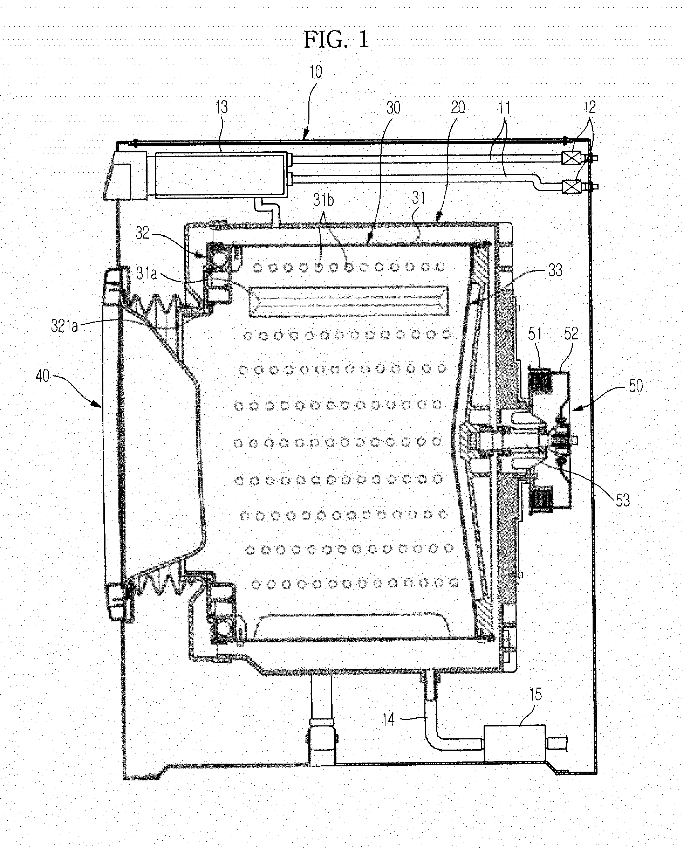

The washing machine in accordance with this embodiment, as shown in FIG. 1, includes a housing 10 forming the external appearance of the washing machine, a tub 20 suspended within the housing 10 to contain water, a drum 30 rotatably installed within the tub 20, a door 40 to open and close through holes 321 a and 322a formed on the front surface of the drum 30 so that laundry is put into the drum 30 therethrough, and a drive motor 50 installed on the rear surface of the tub 20 and generating rotary force to rotate the drum 30.

Therefore, after the laundry is put into the drum 30 through the through holes 321 a and 322a by opening the door 40, the drive motor 50 rotates the drum 30 to lift and then fall the laundry within the drum 30, thereby washing the laundry using a difference in elevation.

Water supply pipes 11 to supply water to the tub 20, water supply valves 12 to open and close the water supply pipes 11 and a detergent supply device 13 to mix detergent with the water supplied through the water supply pipes 11 are disposed above the tub 20, and a drain pipe 14 and a drain pump 15 to discharge wash water after completion of washing are disposed under the tub 20.

The drive motor 50 includes a stator 51 installed on the tub 20, a rotor 52 rotating while interacting with the stator 51, and a rotary shaft 53 provided with one end installed on the rotor 62 and the other end passing through the rear surface of the tub 20 and installed on the drum 30 so as to rotate the drum 30 together with rotation of the rotor 52.

The drum 30, as shown in FIG. 1, includes a cylindrical body 31, a front member 32 installed at the front end of the body 31 and covering the front surface of the body 31, and a rear member 33 covering the rear surface of the body 31.

The body 31 is formed by bending a plate member made of metal into a circular shape. A plurality of communication holes 31 b is formed through the body 31 so as to pass water, and a plurality of lifters 31 a separated from each other is formed on the inner surface of the body 31 so as to lift the laundry within the drum 30 according to rotation of the drum 30.

The front end of the rotary shaft 53 is fixed to the rear member 33 through insert injection molding, and thus rotary force to rotate the drum 30 is transmitted to the drum 30 through the rotary shaft 53. Therefore, the rear member 33 may be made of metal in consideration of strength.

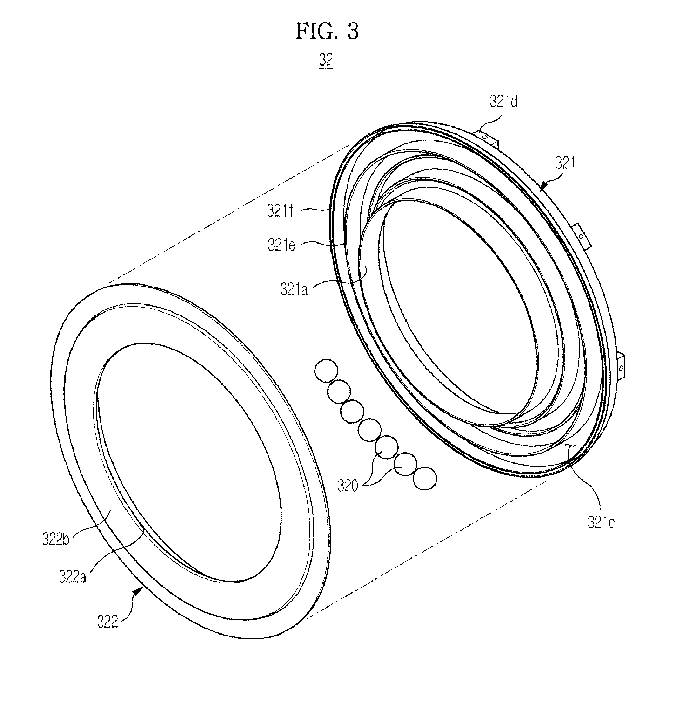

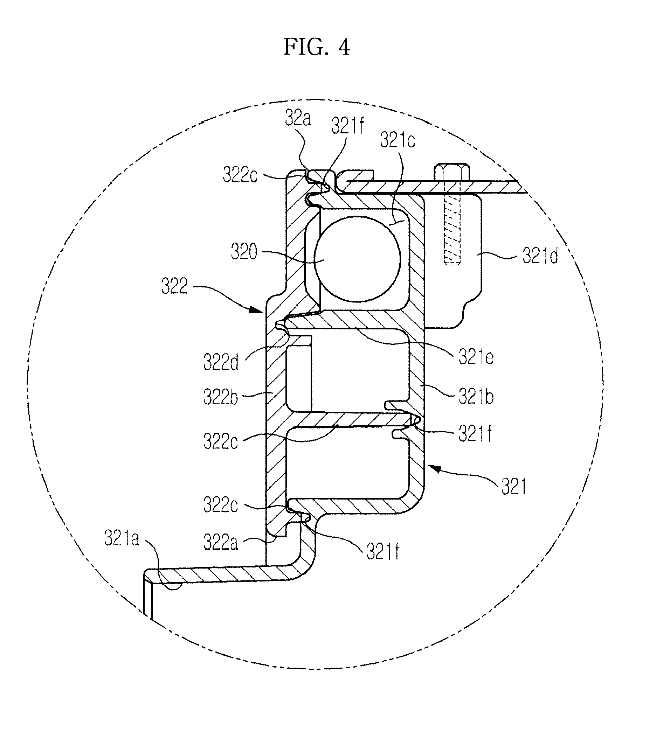

A race 321 c to accommodate a plurality of balls 320, serving as a mass body, such that the plurality of balls 320 is movable in the circumferential direction of the race 321 c is provided on the front member 32, as shown in FIGS. 3 and 4. The race 321c and the plurality of balls 320 of the front member 32 function as a ball balancer.

The through holes 321 a and 322a are formed at the center of the front member 32 so that laundry is put into the body 31 via the through holes 321 a and 322a, and the disc-shaped race 321 c to accommodate the plurality of balls 320 such that the plurality of balls 320 is movable in the circumferential direction is provided at the inside of the edge of the front member 32. The inside of the race 321 c may be filled with a fluid, such as oil, so as to reduce noise and friction.

The front member 32 is fixed to the front end of the body 31 through fastening members, such as screws passing through the body 31. For this purpose, fastening parts 321 d to which the fastening members are fastened protrude from the rear surface of the front member 32. The plural fastening parts 321d are provided so as to fix the front member 32 to the body 31 through the plural fastening members, and are separated from each other in the circumferential direction on the rear surface of the front member 32.

If the front member 32 is made of metal, the front member 32 is formed of a thin metal plate in consideration of the overall weight of the drum 30. When the front member 32 formed of the thin metal plate is fixed to the body 31 by the fastening members, the front ends of the fastening members may penetrate the thin front member 32 and protrude to the inside of the drum 30, and in this case, the fastening members protruding to the inside of the drum 30 may damage to the laundry within the drum 30. Therefore, the front member 32 formed of the metal plate needs to be fixed to the body 31 through a complicated process, such as seaming.

Therefore, in this embodiment, the front member 32 is made of resin so as to be fixed to the body 31 through the fastening members. If the front member 32 is made of resin, although the front member 32 is thick, the weight of the drum 30 maintains a designated value or less, and thus the front member 32 may be fixed to the body 31 through the fastening members.

Further, a support part 32a protruding from the outer circumferential surface of the front member 32 in the radial direction and provided with a rear surface supported by the front end of the body 31 to stabilize installation of the front member 32 to the body 31 is provided on the front member 32.

When the front member 32 having the above-described configuration is directly installed at the front end of the body 31 and thus functions as a ball balancer, a member used to form a balancer housing of the ball balancer and an installation process thereof may be omitted and thus cost reduction and process shortening effects may be achieved.

The front member 32 includes a first front member panel 321 including a first through hole 321 a formed at the center thereof and a first extension part 321 b extending from the first through hole 321 a in the radial direction, and a second front member panel 322 including a second through hole 322a formed at the center thereof and corresponding to the first through hole 321 a and a second extension part 322b extending from the second through hole 322a and corresponding to the first extension part 321 b, and a plurality of disc-shaped spaces formed by the first extension part 321 b and the second extension part 322b according to connection between the first front member panel 321 and the second front member panel 322. Here, one of the plural disc-shaped spaces defines the above-describe race 321c. In this embodiment, from among the plural disc-shaped spaces, the outermost disc-shaped space adjacent to the body 31 defines the race 321 c.

In this embodiment, the race 321 c, one side of which is opened, is firstly formed at the first extension part 321 b of the front member panel 321. Then, during a process of connecting the second front member panel 322 and the second front member panel 321 to each other, the second extension part 322 of the second front member panel 322 covers the opened side of the race 321c so as to close the race 321 c formed at the first extension part 321 b, thereby completing formation of the race 321 c.

Further, the above-described plural fastening parts 321 d are formed on the rear surface of the first front member panel 321, and the above-described support part 32a is formed by connecting regions respectively extending from the outer circumferential surfaces of the first front member panel 321 and the second front member panel 322 to each other.

The first front member panel 321 and the second front member panel 322 further include a plurality of disc-shaped ribs 321 e and 322c protruding from the first extension part 321 b and the second extension part 322b, and a plurality of disc-shaped grooves 321f and 322d depressed in the first extension part 321 b and the second extension part 322b at positions corresponding to the plurality of disc-shaped ribs 322c and 321 e of the second extension part 322b and the first extension part 321 b such that the front ends of the disc-shaped ribs 322c and 321 e are inserted into the disc-shaped grooves 321f and 322d, to mutually support the first front member panel 321 and the second front member panel 322 so as to reinforce the front member 32, thereby forming the above-described plural disc-shaped spaces and allowing one of the plural disc-shaped spaces to define the race 321 c.

Therefore, the front ends of the disc-shaped ribs 321 e and 322c are fused to the insides of the disc-shaped grooves 322d and 321f through spin fusion or heat fusion, thereby connecting the first front member panel 321 and the second front member panel 322 to each other.

In this embodiment, the first front member panel 321 and the second front member panel 322 are connected to each other through spin fusion. Now, a process of connecting the first front member panel 321 and the second front member panel 322 to each other through spin fusion will be described, as follows.

First, after the plural balls 320 and the fluid are put into the race 321 c provided on the first front member panel 321, the second front member panel 322 covers the race 321 c of the first front member panel 321, thereby allowing the front ends of the disc-shaped ribs 321 e and 322c to be accommodated within the disc-shaped grooves 322d and 321f.

Under the above state, when one of the first front member panel 321 and the second front member panel 322 is rotated with respect to the other of the first front member panel 321 and the second front member panel 322, friction between the front ends of the disc-shaped ribs 321e or 322c and the inner surfaces of the disc-shaped grooves 322d or 321f occurs, thus generating frictional heat between the front ends of the disc-shaped ribs 321 e or 322c and the inner surfaces of the disc-shaped grooves 322d or 321f. The front ends of the disc-shaped ribs 321 e or 322c and the inner surfaces of the disc-shaped grooves 322d or 321f are temporarily melted due to frictional force, and thus are fused to each other, thereby completing connection between the first front member panel 321 and the second front member panel 322.

Since the first front member panel 321 and the second front member panel 322 are respectively made of resin, as described above, the first front member panel 321 and the second front member panel 322 may be simply connected to each other through fusion due to frictional force without any additional member. Further, since the first front member panel 321 and the second front member panel 322 are connected to each other through fusion of the front ends of the disc-shaped ribs 321e or 322c to the disc-shaped grooves 322d or 321f due to frictional force, the fluid does not leak even if an additional member, such as a sealing member, is not installed.

Although this embodiment exemplarily illustrates the support part 32a as being formed by connecting the regions respectively extending from the outer circumferential surfaces of the first front member panel 321 and the second front member panel 322 to each other, formation of the support part 32a is not limited thereto. That is, the support part 32a may extend from only one of the first front member panel 321 and the second front member panel 322.

Further, although this embodiment exemplarily illustrates the ball balancer as including the plural balls 320, serving as a mass body, in the race 321 c, the balancer applied to the embodiment is not limited thereto. That is, a fluid balancer in which the race 321 c is only filled with a fluid, such as oil, may be applied to the embodiment of the present disclosure.

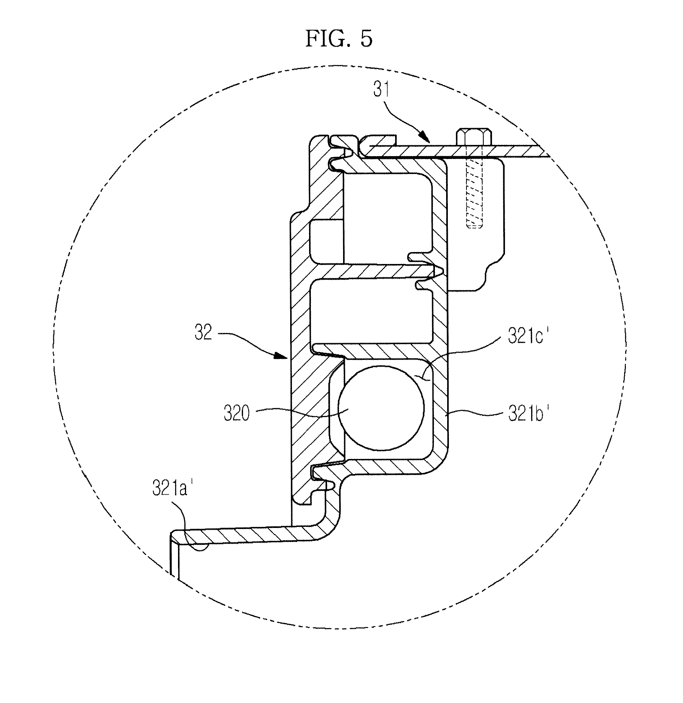

Further, although this embodiment exemplarily illustrates the race 321 c as being defined by the outermost disc-shaped space formed at the outermost region of the front member 32 from among the plural disc-shaped spaces, the race 321 c is not limited thereto. That is, as shown in FIG. 5, a disc-shaped space adjacent to the center of a front member 32, i.e., a first through hole 321 a' or a second through hole 322a, may define a race 321 c' formed at the first extension part 321 b'.

Further, although this embodiment exemplarily illustrates the race 321 c as being provided on the first front member panel 321, formation of the race 321 c is not limited thereto. That is, a race may be formed on the second front member panel or parts of a race may be respectively formed on the first front member panel and the second front member panel so that formation of the race is completed by connecting the first front member panel and the second front member panel to each other.

Further, although this embodiment exemplarily illustrates the first front member panel 321 and the second front member panel 322 as being connected to each other after the balls 320 and the fluid are put into the race 321 c, connection between the first front member panel 321 and the second front member panel 322 is not limited thereto. That is, after the front member 32 provided with the race 321 formed therein is formed by connecting the first front member panel 321 and the second front member panel 322 to each other, the fluid may be put into the race 321 c.

In more detail, after the front member 32 is formed by connecting the first front member panel 321 and the second front member panel 322 to each other under the condition that the plurality of balls 320 is accommodated within the race 321 c of the first front member panel 321, the fluid is put into the race 321 c through a fluid inlet (not shown) provided on the first front member panel 321 or the second front member panel 322. After the fluid is put into the race 321 c, the fluid inlet is closed, thereby forming the front member 32 in which the balls 320 and the fluid are put into the race 321 c.

Further, although this embodiment exemplarily illustrates the first front member panel 321 and the second front member panel 322 as being connected to each other through spin fusion, connection between the first front member panel 321 and the second front member panel 322 is not limited thereto. That is, the first front member panel 321 and the second front member panel 322 may be connected to each other through heat fusion in which fusion is achieved by applying heat directly to a region to be fused.

As is apparent from the above description, in a washing machine in accordance with one embodiment of the present disclosure, a race provided on a front member of a drum and a mass body accommodated within the race function as a balancer, and thus a member used to form a balancer housing and an installation process thereof may be omitted and cost reduction and process shortening effects may be achieved.

Further, the front member is made of resin and thus may have a sufficient thickness without significant increase in the weight of the drum due to the front member and thus be fixed to a body of the drum using fastening members.

Although a few embodiments of the present disclosure have been shown and described, it would be appreciated by those skilled in the art that changes may be made in these embodiments without departing from the principles and spirit of the invention, the scope of which is defined in the claims and their equivalents.

## Claims

1. A washing machine comprising:
a tub to contain water; and
a drum rotatably installed within the tub, wherein:
the drum includes a cylindrical body, a front member covering the front surface of the body, and a rear member covering the rear surface of the body;
the front member includes a first front member panel made of resin and including a first through hole through which laundry is put into the body and a first extension part extending from the first through hole in the radial direction, and a second front member panel made of resin and including a second through hole corresponding to the first through hole and a second extension part extending from the second through hole and corresponding to the first extension part, and at least one disc-shaped space formed by the first extension part and the second extension part; and
at least one of the at least one disc-shaped space defines a race in which a mass body to reduce unbalance generated during rotation of the drum is accommodated so as to be movable in the circumferential direction, the race and the mass body forming a balancer.

2. The washing machine according to claim 1, wherein the front member further includes a support part protruding in the radial direction and supported by the front end of the body.

3. The washing machine according to claim 1, wherein the front member further includes a plurality of fastening parts protruding from the rear surface of the front member and separated from each other in the circumferential direction, and is fixed to the body through fastening members penetrating the body and fastened to the fastening parts.

4. The washing machine according to claim 1, further comprising:
a plurality of disc-shaped ribs protruding from one of the first front member panel and the second front member panel toward the other of the first front member panel and the second front member panel; and
a plurality of disc-shaped grooves depressed in the other of the first front member panel and the second front member panel to accommodate the front ends of the plurality of disc-shaped ribs,
wherein the at least one disc-shaped space is formed by the plurality of disc-shaped ribs.

5. The washing machine according to claim 4, wherein the front ends of the plurality of disc-shaped ribs are fused to the plurality of disc-shaped grooves due to frictional heat according to relative rotation of the first front member panel and the second front member panel.

6. The washing machine according to claim 1, wherein the mass body includes a plurality of balls.

7. The washing machine according to claim 1, wherein the mass body includes a fluid.
